# FASCICULE DE BREVET EUROPEEN

(11) **EP 4 585 025 B1**
(45) Date de publication et mention de la délivrance du brevet: **27.05.2026**
(21) Numéro de dépôt: 25151702.5
(22) Date de dépôt: 14.01.2025
(51) Int. Cl.: A01B 39/18

(54) **ENSEMBLE DE TRAVAIL DU SOL DÉPLAÇABLE LE LONG D'UN RANG DE CULTURES ET DISPOSITIF DE TRAVAIL DU SOL INTÉGRANT AU MOINS UN TEL ENSEMBLE**
ENTLANG EINER REIHE VON KULTUREN VERFAHRBARE BODENBEARBEITUNGSANORDNUNG UND BODENBEARBEITUNGSVORRICHTUNG MIT MINDESTENS EINER SOLCHEN ANORDNUNG
SOIL WORKING ASSEMBLY THAT CAN BE MOVED ALONG A ROW OF CROPS AND SOIL WORKING DEVICE INCLUDING AT LEAST ONE SUCH ASSEMBLY

(30) Priorité: 15.01.2024 FR 2400352
(43) Date de publication de la demande: 16.07.2025
(73) Titulaire: Ferotin, Benoît, 26780 Chateauneuf du Rhône (FR); Ferotin, Claude, 26780 Chateauneuf du Rhône (FR)
(72) Inventeur: Ferotin, Benoît, 26780 Chateauneuf du Rhône (FR); Ferotin, Claude, 26780 Chateauneuf du Rhône (FR)
(74) Mandataire: Ipsilon

(56) Documents cités:
- EP-A1- 4 023 041
- EP-B1- 1 125 487
- WO-A1-2023/187519
- FR-A1- 3 121 319

## Description

La présente invention concerne un ensemble de travail du sol déplaçable le long d'un rang de cultures ainsi qu'un dispositif de travail du sol intégrant au moins un tel ensemble.

Elle concerne en particulier un ensemble de travail du sol déplaçable le long d'un rang de cultures comprenant au moins, un support porte-outil couplable à un châssis d'une machine de travail du sol ou d'un véhicule tracteur et présentant une direction de déplacement, un outil rotatif non moteur, tel qu'un disque, et un système de liaison de l'outil au support.

Des ensembles de travail du sol sont connus comme l'illustrent la demande internationale WO 2023/187519. D'autres exemples d'ensembles de travail du sol sont fournis dans les documents EP4023041, EP1125487, FR3121319.

Les cultures en rangs, telles que les cultures des arbres fruitiers, des vignes, des arbustes ou autres nécessitent un binage au niveau des pieds desdites cultures. La difficulté réside dans le fait que la largeur entre deux rangs de cultures peut être variable. De même, la distance entre deux cultures dans un même rang peut être variable. Les solutions actuelles utilisent des palpeurs pour pouvoir travailler au plus près des plantes ce qui amène à des solutions complexes sans pouvoir traiter en parallèle deux rangs de cultures à l'intérieur d'une large plage de largeurs.

Un but de l'invention est de proposer un ensemble de travail du sol dont la conception permet un travail au plus près des végétaux organisés en rang, et un travail aisément adaptable à différentes largeurs inter rangs quand plusieurs ensembles sont montés sur un même châssis.

A cet effet, l'invention a pour objet un ensemble de travail du sol comprenant au moins un support porte-outil couplable à un châssis d'une machine de travail du sol ou d'un véhicule tracteur, un outil rotatif non moteur, tel qu'un disque, et un système de liaison de l'outil au support, caractérisé en ce que le système de liaison comprend un premier bras couplé au support à pivotement autour d'un axe dit premier axe pivot, un deuxième bras porte-outil couplé au premier bras à pivotement autour d'un axe dit deuxième axe pivot parallèle au premier axe pivot pour un déplacement du deuxième bras entre une position rapprochée du premier bras et une position écartée du premier bras, en ce que l'outil rotatif présente un axe de rotation s'étendant sensiblement parallèlement, c'est-à-dire parallèlement à plus ou moins 15 degrés près, au deuxième axe pivot, en ce que ledit ensemble comprend un organe d'immobilisation du premier bras dans une position angulaire réglable autour du premier axe pivot, et en ce que ledit ensemble comprend au moins un élément de rappel du deuxième bras en position écartée du premier bras, cet élément de rappel étant configuré pour à l'état entraîné du deuxième bras de la position écartée vers la position rapprochée du premier bras exercer une force de rappel du deuxième bras vers la position écartée du premier bras. La présence de deux bras permet à l'aide du premier bras de prépositionner l'ensemble deuxième bras/outil plus ou moins près de la culture à travailler. La présence d'un deuxième bras équipé d'un organe de rappel permet de travailler de manière permanente au plus près de la culture sans présence de palpeur. Un tel ensemble de travail du sol est simple d'utilisation, est adapté à tout type de sol, ne nécessite pas de puissance élevée du véhicule tracteur ou de la machine de travail du sol auquel le dit ensemble de travail du sol est apte à être couplé. Sa conception permet de le placer à l'avant ou à l'arrière du véhicule tracteur ou de la machine de travail du sol.

Selon un mode de réalisation de l'invention, la force de rappel de l'élément de rappel est une force réglable. Il en résulte une possibilité de s'adapter à chaque type de culture.

Selon un mode de réalisation de l'invention, l'élément de rappel est un accumulateur d'énergie configuré pour emmagasiner une énergie à l'état entraîné en déplacement du deuxième bras depuis la position écartée vers la position rapprochée du premier bras et à restituer ladite énergie pour un entraînement en déplacement du deuxième bras de la position rapprochée du premier bras vers la position écartée du premier bras, cet accumulateur d'énergie étant choisi dans le groupe des accumulateurs d'énergie formé par les ressorts et les accumulateurs hydrauliques ou hydropneumatiques. La conception d'un tel ensemble de travail du sol est simple.

Selon un mode de réalisation de l'invention, l'élément de rappel est un ressort disposé entre le support et le deuxième bras.

Selon un mode de réalisation de l'invention, le ressort est associé à un élément de précontrainte du ressort apte à précontraindre de manière réglable le ressort pour faire varier la force de rappel de l'élément de rappel formé par ledit ressort.

Selon un mode de réalisation de l'invention, ledit ensemble comprend un actionneur de commande en déplacement à pivotement du deuxième bras disposé entre le support et le deuxième bras, cet actionneur étant configuré pour commander au moins le passage du deuxième bras d'une position écartée du premier bras à une position rapprochée du premier bras. Il est ainsi possible en fin de rang d'amener l'ensemble de travail du sol en position de plus faible encombrement. Cette conception facilite également le transport sur route d'un tel ensemble de travail du sol.

Selon un mode de réalisation de l'invention, l'actionneur de commande en déplacement à pivotement du deuxième bras est un vérin hydraulique ou pneumatique raccordable à une source de fluide sous pression, ce vérin comprenant une première chambre, configurée pour, à l'état alimenté en fluide sous pression, commander un déplacement du deuxième bras dans le sens d'un rapprochement du premier bras et, une deuxième chambre.

Selon un mode de réalisation de l'invention, l'élément de rappel est un accumulateur hydraulique ou hydropneumatique en communication fluidique avec la deuxième chambre du vérin constitutif de l'actionneur de commande en déplacement à pivotement du deuxième bras.

Selon un mode de réalisation de l'invention, l'accumulateur qui est un accumulateur hydropneumatique est composé de deux parties séparées l'une de l'autre, l'une des parties étant remplie d'un gaz sous pression, l'autre partie en communication fluidique avec la deuxième chambre du vérin qui est un vérin hydraulique étant apte à être remplie avec un fluide hydraulique.

Selon un mode de réalisation de l'invention, l'ensemble de travail du sol comprend un dispositif, tel qu'un manomètre, de mesure de la pression dans la deuxième chambre. La présence de ce manomètre permet de maitriser la force de rappel exercée.

Selon un mode de réalisation de l'invention, l'organe d'immobilisation du premier bras dans une position angulaire réglable autour du premier axe pivot est un vérin.

Selon un mode de réalisation de l'invention, l'organe d'immobilisation du premier bras dans une position angulaire réglable autour du premier axe pivot étant un vérin hydraulique dit premier vérin et l'actionneur de commande en déplacement à pivotement du deuxième bras étant un vérin hydraulique dit deuxième vérin, l'ensemble comprend, pour le raccordement des premier et deuxième vérins à au moins une source de fluide sous pression, au moins un distributeur et des conduites de circulation de fluide disposées au moins entre le distributeur et les premier et deuxième vérins, et ledit ensemble comprend une unité de commande du distributeur équipée d'au moins trois organes de commande, l'un des organes de commande est configuré pour commander l'alimentation en fluide du premier vérin, l'un des organes de commande est configuré pour commander l'alimentation en fluide de la deuxième chambre du deuxième vérin et l'un des organes de commande est configuré pour commander l'alimentation en fluide de la première chambre du deuxième vérin.

L'invention a encore pour objet un dispositif de travail du sol comprenant au moins un châssis d'un véhicule tracteur ou d'une machine de travail du sol et au moins un ensemble de travail du sol couplable audit châssis, caractérisé en ce que le ou au moins l'un des ensembles de travail du sol est du type précité.

Selon un mode de réalisation de l'invention, le nombre d'ensembles de travail du sol étant au moins égal à 2, l'organe d'immobilisation du premier bras dans une position angulaire réglable autour du premier axe pivot de chaque ensemble étant un vérin hydraulique dit premier vérin, chaque ensemble de travail du sol comprenant un actionneur de commande en déplacement à pivotement du deuxième bras de chaque ensemble sous forme d'un vérin hydraulique dit deuxième vérin et chaque ensemble comprenant, pour le raccordement des premier et deuxième vérins de chaque ensemble à au moins une source de fluide sous pression, au moins un distributeur et des conduites de circulation de fluide disposées au moins entre le distributeur et les premier et deuxième vérins, le distributeur est commun auxdits ensembles et le distributeur est associé à une unité de commande du distributeur équipée d'au moins quatre organes de commande, l'un des organes de commande est configuré pour commander l'alimentation en fluide du premier vérin de l'un des ensembles, l'un des organes de commande est configuré pour commander l'alimentation en fluide du premier vérin de l'autre des ensembles, l'un des organes de commande est configuré pour commander l'alimentation en fluide de la deuxième chambre du deuxième vérin de chaque ensemble et l'un des organes de commande est configuré pour commander l'alimentation en fluide de la première chambre du deuxième vérin de chaque ensemble.

### Brève description des dessins

L'invention sera bien comprise à la lecture de la description suivante d'exemples de réalisation, en référence aux dessins annexés dans lesquels :
[Fig. 1] représente une vue partielle en perspective d'un dispositif de travail du sol équipé de deux ensembles de travail du sol conformes à l'invention, en position rapprochée du deuxième bras du premier bras ;
[Fig. 2] représente une vue partielle en élévation d'un dispositif de travail du sol équipé d'un ensemble de travail du sol conforme à l'invention, en position rapprochée du deuxième bras du premier bras ;
[Fig. 3] représente une vue partielle de dessus d'un dispositif de travail du sol équipé de deux ensembles de travail du sol conformes à l'invention, en position rapprochée du deuxième bras du premier bras ;
[Fig. 4] représente une vue de dessus d'un dispositif de travail du sol équipé de deux ensembles de travail du sol conformes à l'invention, en position rapprochée du deuxième bras du premier bras, les circuits hydrauliques ayant été représentés ;
[Fig. 5] représente une vue partielle de dessus d'un dispositif de travail du sol équipé de deux ensembles de travail du sol conformes à l'invention lors du déplacement du dispositif de travail du sol entre deux rangs de cultures ;
[Fig. 6] représente une vue partielle de dessus d'un dispositif de travail du sol équipé de deux ensembles de travail du sol conformes à l'invention ;
[Fig. 7] représente une vue schématique d'un accumulateur ;
[Fig. 8] représente une vue partiellement en coupe de l'actionneur de commande en déplacement du deuxième bras.

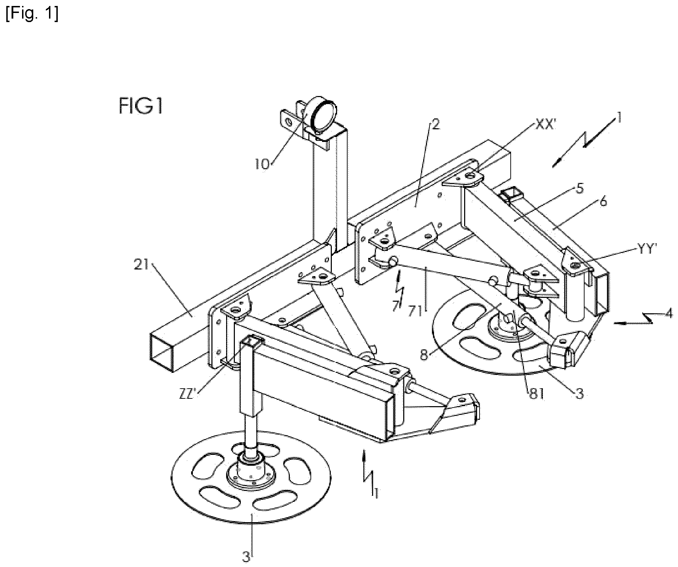

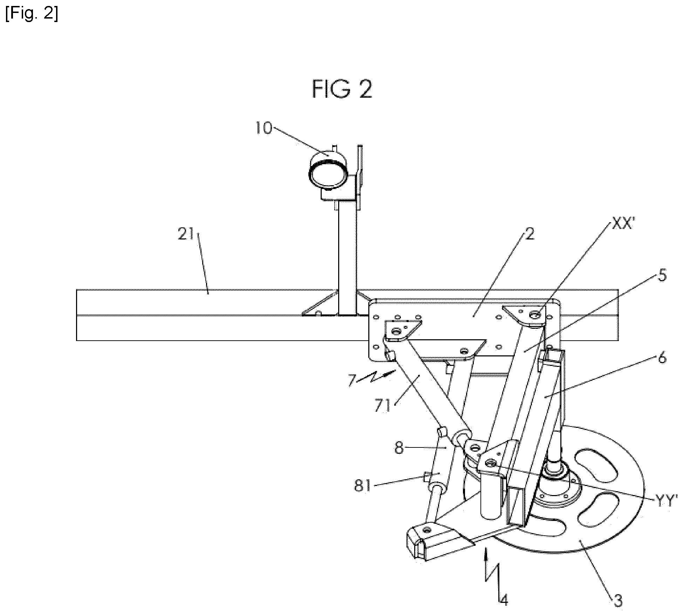

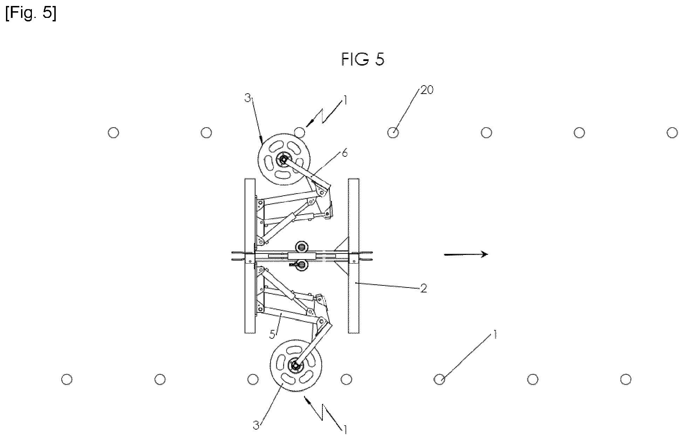

Comme mentionné ci-dessus, l'invention concerne un ensemble 1 de travail du sol ainsi qu'un dispositif de travail du sol pouvant intégrer un ou plusieurs ensembles 1 de travail du sol, comme illustré aux figures 1 et 2. Le ou chaque ensemble 1 de travail du sol est donc couplé à un châssis 21 d'un véhicule tracteur d'une machine de travail du sol pour former un dispositif de travail du sol. Le ou chaque ensemble 1 de travail du sol est plus particulièrement destiné à se déplacer le long d'un rang 20 de cultures, comme illustré à la figure 5. Lorsque le dispositif de travail du sol comprend deux ensembles 1 de travail du sol, comme illustré à la figure 5, il est possible de travailler en parallèle deux rangs de cultures parallèles, ledit dispositif de travail du sol étant disposé entre lesdits rangs de cultures. Bien évidemment, lorsque le dispositif de travail du sol ne comprend qu'un seul ensemble 1 de travail du sol, un seul rang de cultures est travaillé. Ce rang de cultures peut être un rang d'arbres fruitiers, de vigne, de plantations d'un pépiniériste ou autre.

Lorsque le dispositif de travail du sol comprend plusieurs ensembles 1 de travail du sol, ces ensembles 1 de travail du sol sont généralement identiques, de sorte qu'il ne sera décrit ci-après qu'un seul ensemble 1 de travail du sol. Cet ensemble 1 de travail du sol présente une direction de déplacement représentée par une flèche à la figure 5. Généralement, le châssis 21 auquel l'ensemble 1 de travail du sol est couplé comprend au moins une poutre s'étendant transversalement à la direction de déplacement dudit ensemble 1 de travail du sol.

Cet ensemble 1 de travail du sol comprend au moins :
- un support 2 porte-outil coupable au châssis 21,
- un outil 3 rotatif non moteur se présentant ici sous forme d'un disque, et
- un système 4 de liaison de l'outil 3 au support 2 porte-outil. Dans l'exemple représenté, le support 2 porte-outil est une platine fixée sur un côté menant ou mené de la poutre constitutive du châssis 21.

Le système 4 de liaison comprend un premier bras 5 couplé au support 2 à pivotement autour d'un axe du premier axe pivot XX'. Ce premier axe pivot XX' s'étend à la verticale en configuration d'utilisation dudit ensemble 1 de travail du sol. Ce système 4 de liaison comprend un deuxième bras 6 porte-outil couplé au premier bras 5 à pivotement autour d'un axe dit deuxième axe pivot YY' parallèle au premier axe pivot XX' pour un déplacement du deuxième bras 6 entre une position rapprochée du premier bras 5 et une position écartée du premier bras 5. Le deuxième bras 6 porte l'outil 3, en l'occurrence le disque qui est monté à rotation autour d'un axe de rotation ZZ' s'étendant sensiblement parallèlement, c'est à dire parallèlement à plus ou moins 15° près au deuxième axe pivot YY'. Cet outil 3 s'étend donc partiellement sous le deuxième bras 6 pour venir se positionner au plus près du pied de culture, comme illustré à la figure 5.

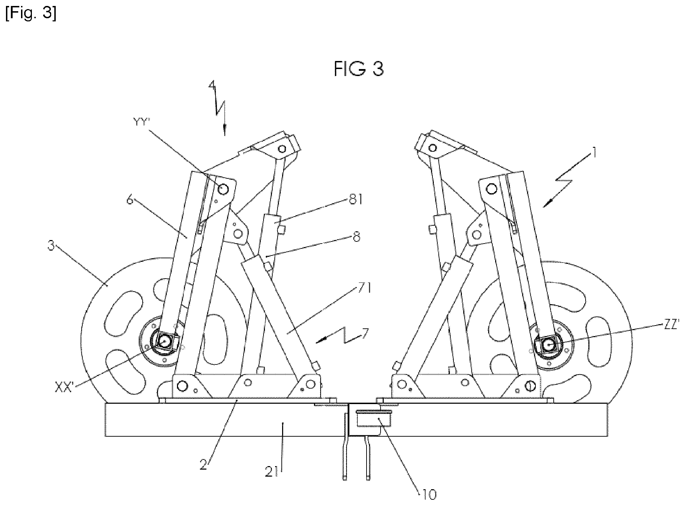

Cet ensemble 1 de travail du sol comprend un organe 7 d'immobilisation du premier bras 5 dans une position angulaire réglable autour du premier axe pivot XX'. Il est ainsi possible d'adapter la position du premier bras 5 en fonction de la largeur entre deux rangs, en particulier lorsque le dispositif de travail du sol comprend deux ensembles 1 comme illustré aux figures 3 et 5 par exemple.

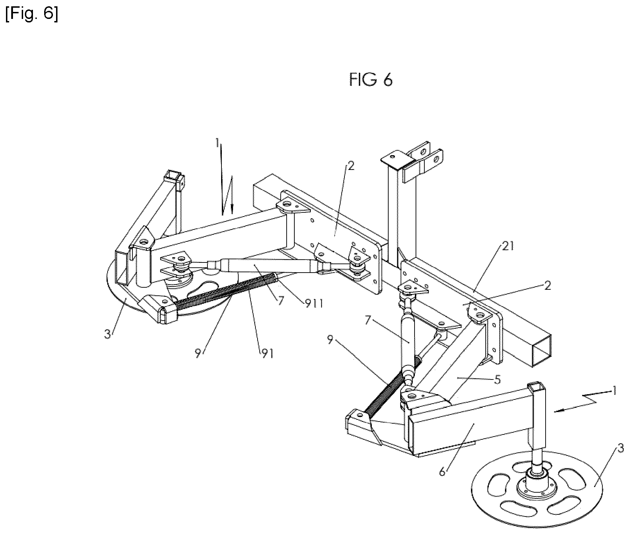

Dans l'exemple des figures 1 et 2, l'organe 7 d'immobilisation du premier bras 5 dans une position angulaire réglable autour du premier axe pivot XX' est un vérin 71 disposé entre le premier bras 5 et le support 2 porte-outil. En variante et comme illustré à la figure 6, cet organe 7 d'immobilisation du premier bras 5 dans une position angulaire réglable peut être formé par une biellette disposée entre le premier bras 5 et le support 2 porte-outil, cette biellette étant de longueur réglable. Il est également possible d'imaginer, au niveau de la liaison du premier bras 5 au support 2 porte-outil, une pluralité de perçages du premier bras 5 et du support 2 porte-outil positionnable par paire en coïncidence et immobiliser dans la position sélectionnée par, par exemple, une goupille. L'avantage de la réalisation de l'organe 7 d'immobilisation du premier bras 5 sous forme d'un vérin 71 est que la position du premier bras 5 peut être réglée à distance par simple actionnement du vérin.

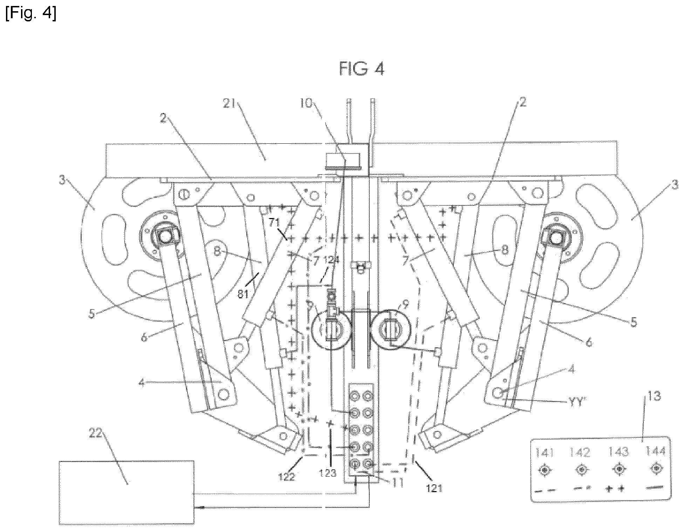

Dans l'exemple représenté, le vérin 71 est un vérin hydraulique raccordable à une source 22 de fluide sous pression et l'ensemble 1 de travail du sol comprend, pour le raccordement du vérin 71 à ladite source 22 de fluide sous pression, un distributeur 11 et des conduites 121, 122 de circulation de fluide représentées par un trait et un point à la figure 4 pour l'un des ensembles et par un trait en pointillés pour l'alimentation du vérin 71 de l'autre ensemble 1, ces conduites 121 et 122 permettant à chaque fois l'alimentation de chaque chambre du vérin 71. Ainsi, une alimentation en fluide sous pression de l'une des chambres du vérin 71 génère un déplacement à pivotement du premier bras 5 vers l'extérieur de l'ensemble 1 de traitement du sol tandis qu'une alimentation en fluide sous pression de l'autre des chambres du vérin 71 génère un déplacement à pivotement du premier bras 5 suivant une direction opposée. Plus la largeur entre rangs de cultures est importante, plus la tendance est de placer le premier bras 5 dans une position inclinée vers l'extérieur de l'ensemble 1 de travail du sol. On comprend que, grâce à ce montage du premier bras 5, on peut couvrir une large plage de largeurs entre deux rangs de cultures.

L'ensemble 1 de travail du sol comprend un élément 9 de rappel du deuxième bras 6 en position écartée du premier bras 5. Cet élément 9 de rappel est configuré pour, à l'état entraîné du deuxième bras 6 de la position écartée vers la position rapprochée du premier bras 5, exercer une force de rappel du deuxième bras 6 vers la position écartée du premier bras 5. Idéalement, la force de rappel de l'élément 9 de rappel est une force réglable. Cet élément 9 de rappel est un accumulateur d'énergie configuré pour emmagasiner une énergie sous forme de pression à l'état entraîné en déplacement du deuxième bras 6 depuis la position écartée vers la position rapprochée du premier bras 5 et à restituer ladite énergie pour un entraînement en déplacement du deuxième bras 6 de la position rapprochée du premier bras 5 vers la position écartée du premier bras. 5. Cet accumulateur d'énergie est choisi dans le groupe des accumulateurs d'énergie formé par les ressorts 91 et les accumulateurs hydrauliques ou hydropneumatiques 92.

Dans une version simplifiée de l'invention, telle qu'illustrée à la figure 6, l'élément 9 de rappel est un ressort 91 disposé entre le support 2 et le deuxième bras 6. Ce ressort 91 est associé à un élément 911 de précontrainte du ressort 91 apte à précontraindre de manière réglable le ressort 91 pour faire varier la force de rappel de l'élément 9 de rappel formé par ledit ressort 91.

Ainsi, ce ressort 91 est équipé à une extrémité d'un écrou coopérant avec une tige filetée pour pré-comprimer de manière variable le ressort 91 en fonction de la résistance au rapprochement du deuxième bras vers le premier bras souhaité.

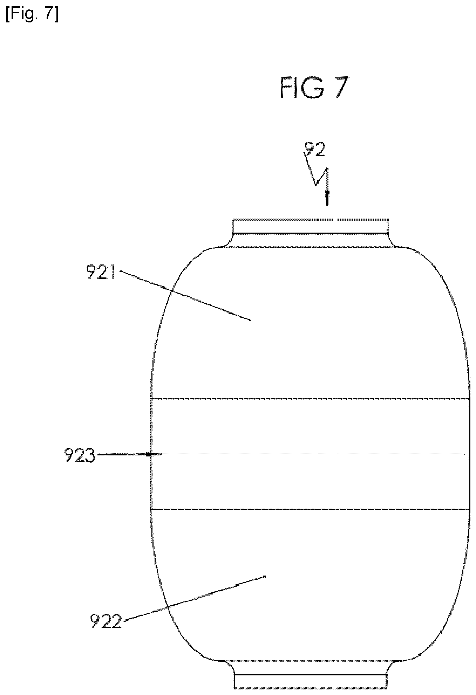

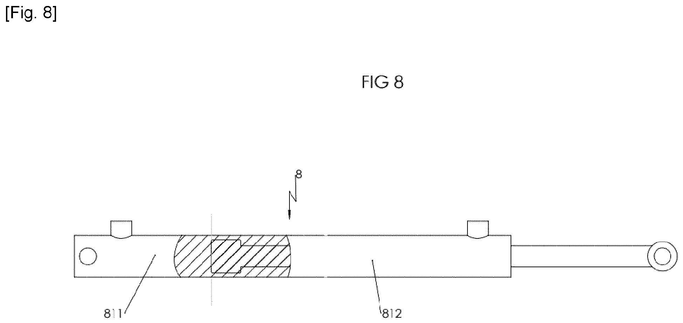

Dans l'exemple des figures 1 et 4, l'ensemble 1 de travail du sol comprend un actionneur 8 de commande en déplacement à pivotement du deuxième bras 6 disposé entre le support 2 porte-outil et le deuxième bras 6. Cet actionneur 8 est configuré pour commander au moins le passage du deuxième bras 6 d'une position écartée du premier bras 5 à une position rapprochée du premier bras 5. L'actionneur 8 de commande en déplacement à pivotement du deuxième bras 6 est un vérin 81, de préférence hydraulique, raccordable à une source 22 de fluide sous pression. Ce vérin 81 comprend une première chambre 811 configurée pour, à l'état alimenté en fluide sous pression, commander un déplacement du deuxième bras 6 dans le sens d'un rapprochement du premier bras 5 et une deuxième chambre 812. Le détail de ce vérin 81 est fourni à la figure 8. Dans ce mode de réalisation, l'élément 9 de rappel est un accumulateur hydraulique ou hydropneumatique 92 en communication fluidique avec la deuxième chambre 812 du vérin 81 constitutif de l'actionneur 8 de commande en déplacement à pivotement du deuxième bras 6. Le détail d'un accumulateur hydraulique ou hydropneumatique 92 est fourni à la figure 7. Cet accumulateur est composé de deux parties 921, 922 séparées l'une de l'autre. L'une des parties est remplie d'un gaz sous pression, l'autre partie en communication fluidique avec la deuxième chambre du vérin 81 est apte à être remplie avec un fluide hydraulique. Généralement, le gaz sous pression est de l'azote. C'est pourquoi un tel accumulateur peut être appelé boule d'azote. L'élément qui sépare les deux parties de l'accumulateur, représenté en 923 à la figure 7, peut revêtir différentes formes selon le type d'accumulateur. Ainsi, cet élément séparateur peut être une membrane, un piston, une vessie ou autre. A nouveau, pour le fonctionnement de l'actionneur 8 de commande en déplacement à pivotement du deuxième bras 6, lorsque ce dernier est un vérin 81 hydraulique, l'ensemble 1 de travail du sol comprend un distributeur 11, qui peut être commun avec le distributeur de l'actionneur de commande en déplacement du premier bras lorsque ce dernier est un vérin 71, et des conduites de circulation de fluides disposées entre le distributeur 11 et le vérin 81 de commande en déplacement à pivotement du deuxième bras.

Dans l'exemple de la figure 4, la conduite 123, représentée avec des croix, permet d'alimenter la première chambre 811 du vérin 81, tandis que la conduite 124, représentée par un trait plein, permet d'alimenter la deuxième chambre 812 du vérin 81 en communication fluidique avec l'une des parties de l'accumulateur hydropneumatique ou hydraulique 92 et, par suite, ladite partie de l'accumulateur hydropneumatique ou hydraulique. La deuxième chambre 812 du vérin 81 est en communication fluidique avec l'une des parties de l'accumulateur hydropneumatique ou hydraulique 92 par une liaison éventuellement obturable.

Pour contrôler ce pré remplissage de cette deuxième chambre 812 en lien avec l'accumulateur et la force de rappel qui en résulte, l'ensemble 1 de travail du sol comprend un dispositif tel qu'un manomètre 10, de mesure de la pression dans la deuxième chambre 812.

L'avantage de cette solution réside dans la simplicité de mise en œuvre. La pression choisie est définie de manière empirique par l'utilisateur. Cet utilisateur peut adapter la pression en fonction du résultat du traitement du sol souhaité.

Enfin, pour parfaire l'ensemble 1 de travail du sol, cet ensemble 1 de travail du sol comprend une unité 13 de commande du distributeur 11 équipée d'au moins trois organes de commande, tels que des interrupteurs, aptes à commander l'ouverture/fermeture de chaque conduite. Le distributeur 11 est un distributeur à tiroir et l'ouverture/fermeture de chaque conduite est fonction de la position du tiroir.

Dans l'exemple de la figure 4, il est prévu quatre organes de commande représentés en 141, 142, 143 et 144 avec chaque organe de commande associé à la ou les conduites qu'il pilote. Ainsi, l'organe de commande 141 commande l'ouverture/fermeture de la conduite 121, c'est-à-dire le fonctionnement du vérin 71 de commande en déplacement à pivotement du premier bras 5 de l'un des ensembles 1 de traitement du sol. L'organe de commande 142 commande l'ouverture/fermeture de la conduite 122, c'est-à-dire le fonctionnement du vérin 71 de commande en déplacement à pivotement du premier bras 5 de l'autre des ensembles 1 de travail du sol lorsque le dispositif de travail du sol comprend deux ensembles 1 de travail du sol.

L'organe de commande 143 commande l'ouverture/fermeture de la conduite 123 d'alimentation en fluide sous pression de la première chambre 811 de l'actionneur 8 de commande en déplacement à pivotement du deuxième bras 6 de l'un ou des deux ensembles de travail du sol lorsque le dispositif de travail du sol comprend deux ensembles de travail du sol, et l'organe de commande 144 commande l'ouverture/fermeture de la conduite 124, d'alimentation en fluide sous pression de la deuxième chambre 812 de l'actionneur 8 de commande en déplacement à pivotement du deuxième bras en communication fluidique avec l'accumulateur hydraulique ou hydropneumatique de l'un des ensembles ou des deux ensembles de travail du sol lorsque le dispositif de travail du sol comprend deux ensembles 1 de travail du sol.

Bien évidemment, l'un des organes de commande peut être supprimé lorsque le dispositif de travail du sol ne comprend qu'un seul ensemble 1 de travail du sol. En pratique, le fonctionnement du dispositif de travail du sol est tel que suit. On suppose que le dispositif de travail du sol est disposé le long d'un rang de cultures ou entre deux rangs de cultures parallèles, comme illustré à la figure 5. Dans un premier temps, l'utilisateur détermine la position angulaire du premier bras 5 à l'aide de l'organe 7 d'immobilisation du premier bras 5. Cette position est déterminée en fonction de la distance entre rangs, c'est-à-dire la largeur entre rangs de cultures. La force de rappel de l'élément 9 de rappel est ensuite réglée. Dans le cas d'un accumulateur, par exemple dans la position écartée du deuxième bras 6 du premier bras 5, on alimente en fluide la deuxième chambre 812 de l'actionneur 8 de commande en déplacement du deuxième bras 6 et par suite la partie de l'accumulateur en communication fluidique jusqu'à obtention d'une valeur de pression souhaitée. Lorsque le dispositif de travail du sol se déplace le long du rang suivant la flèche représentée à la figure 5, le disque non moteur de chaque ensemble 1 de travail du sol, ou de l'ensemble 1 de travail du sol lorsque le dispositif de travail du sol ne comprend qu'un seul ensemble 1 de travail du sol, rencontre au fur et à mesure de l'avancement une culture du rang qui tend par appui du disque sur la culture à rapprocher le deuxième bras 6 du premier bras 5 à l'encontre de la force de rappel exercée par l'élément de rappel 9. En bout de rang, le deuxième bras 6 peut être rapproché du premier bras 5 par actionnement de l'actionneur 8 de commande en déplacement à pivotement du deuxième bras 6 lorsque cet actionneur 8 est présent pour faciliter la manœuvre en bout de rang avant de parcourir, si nécessaire, une autre allée entre deux rangs.

Un tel dispositif de travail du sol peut travailler avec une vitesse de déplacement élevée et peut se mettre à l'avant ou à l'arrière du châssis de la machine du véhicule tracteur auquel il est couplé.

## Revendications

1. Ensemble (1) de travail du sol comprenant au moins un support (2) porte-outil couplable à un châssis (21) d'une machine de travail du sol ou d'un véhicule tracteur, un outil (3) rotatif non moteur, tel qu'un disque, et un système (4) de liaison de l'outil (3) au support (2), le système (4) de liaison comprend un premier bras (5) couplé au support (2) à pivotement autour d'un axe dit premier axe pivot (XX'), un deuxième bras (6) porte-outil couplé au premier bras (5) à pivotement autour d'un axe dit deuxième axe pivot (YY') parallèle au premier axe pivot (XX') pour un déplacement du deuxième bras (6) entre une position rapprochée du premier bras (5) et une position écartée du premier bras (5), en ce que l'outil (3) rotatif présente un axe de rotation (ZZ') s'étendant sensiblement parallèlement, c'est-à-dire parallèlement à plus ou moins 15 degrés près, au deuxième axe pivot (YY'), **caractérisé en ce que** ledit ensemble (1) comprend un organe (7) d'immobilisation du premier bras (5) dans une position angulaire réglable autour du premier axe pivot (XX'), et **en ce que** ledit ensemble (1) comprend au moins un élément (9) de rappel du deuxième bras (6) en position écartée du premier bras (5), cet élément (9) de rappel étant configuré pour à l'état entraîné du deuxième bras (6) de la position écartée vers la position rapprochée du premier bras (5) exercer une force de rappel du deuxième bras (6) vers la position écartée du premier bras (5).

2. Ensemble (1) de travail du sol selon la revendication 1, **caractérisé en ce que** la force de rappel de l'élément (9) de rappel est une force réglable.

3. Ensemble (1) de travail du sol selon l'une des revendications 1 ou 2, **caractérisé en ce que** l'élément (9) de rappel est un accumulateur d'énergie configuré pour emmagasiner une énergie à l'état entraîné en déplacement du deuxième bras (6) depuis la position écartée vers la position rapprochée du premier bras (5) et à restituer ladite énergie pour un entraînement en déplacement du deuxième bras (6) de la position rapprochée du premier bras vers la position écartée du premier bras (5), cet accumulateur d'énergie étant choisi dans le groupe des accumulateurs d'énergie formé par les ressorts (91) et les accumulateurs hydrauliques ou hydropneumatiques (92).

4. Ensemble (1) de travail du sol selon l'une des revendications 1 à 3, **caractérisé en ce que** l'élément (9) de rappel est un ressort (91) disposé entre le support (2) et le deuxième bras (6).

5. Ensemble (1) de travail du sol selon la revendication 4, **caractérisé en ce que** le ressort (91) est associé à un élément (911) de précontrainte du ressort (91) apte à précontraindre de manière réglable le ressort (91) pour faire varier la force de rappel de l'élément (9) de rappel formé par ledit ressort (91).

6. Ensemble (1) de travail du sol selon l'une des revendications 1 à 5, **caractérisé en ce que** ledit ensemble (1) comprend un actionneur (8) de commande en déplacement à pivotement du deuxième bras (6) disposé entre le support (2) et le deuxième bras (6), cet actionneur (8) étant configuré pour commander au moins le passage du deuxième bras (6) d'une position écartée du premier bras (5) à une position rapprochée du premier bras (5).

7. Ensemble (1) de travail du sol selon la revendication 6, **caractérisé en ce que** l'actionneur (8) de commande en déplacement à pivotement du deuxième bras (6) est un vérin (81) hydraulique ou pneumatique raccordable à une source (22) de fluide sous pression, ce vérin (81) comprenant une première chambre (811) configurée pour à l'état alimenté en fluide sous pression commander un déplacement du deuxième bras (6) dans le sens d'un rapprochement du premier bras (5) et une deuxième chambre (812).

8. Ensemble (1) de travail du sol selon la revendication 7, **caractérisé en ce que** l'élément (9) de rappel est un accumulateur hydraulique ou hydropneumatique (92) en communication fluidique avec la deuxième chambre (812) du vérin (81) constitutif de l'actionneur (8) de commande en déplacement à pivotement du deuxième bras (6).

9. Ensemble (1) de travail du sol selon la revendication 8, **caractérisé en ce que** l'accumulateur qui est un accumulateur hydropneumatique (92) est composé de deux parties (921, 922) séparées l'une de l'autre, l'une des parties étant remplie d'un gaz sous pression, l'autre partie en communication fluidique avec la deuxième chambre du vérin (81), qui est un vérin hydraulique, étant apte à être remplie avec un fluide hydraulique.

10. Ensemble (1) de travail du sol selon l'une des revendications 8 ou 9, **caractérisé en ce que** l'ensemble (1) de travail du sol comprend un dispositif, tel qu'un manomètre (10), de mesure de la pression dans la deuxième chambre (812).

11. Ensemble (1) de travail du sol selon l'une des revendications 1 à 10, **caractérisé en ce que** l'organe (7) d'immobilisation du premier bras (5) dans une position angulaire réglable autour du premier axe pivot (XX') est un vérin (71).

12. Ensemble (1) de travail du sol selon l'une des revendications 7 à 10, **caractérisé en ce que** l'organe (7) d'immobilisation du premier bras (5) dans une position angulaire réglable autour du premier axe pivot (XX') étant un vérin (71) hydraulique dit premier vérin (71) et l'actionneur (8) de commande en déplacement à pivotement du deuxième bras (6) étant un vérin (81) hydraulique dit deuxième vérin (81), l'ensemble (1) comprend, pour le raccordement des premier et deuxième vérins (71, 81) à au moins une source (22) de fluide sous pression, au moins un distributeur (11) et des conduites (121, 122, 123, 124) de circulation de fluide disposées au moins entre le distributeur (11) et les premier et deuxième vérins (71, 81), et **en ce que** ledit ensemble (1) comprend une unité (13) de commande du distributeur (11) équipée d'au moins trois organes (141, 142, 143, 144) de commande, **en ce que** l'un des organes de commande est configuré pour commander l'alimentation en fluide du premier vérin (71), **en ce que** l'un des organes de commande est configuré pour commander l'alimentation en fluide de la deuxième chambre (812) du deuxième vérin (81) et **en ce que** l'un des organes de commande est configuré pour commander l'alimentation en fluide de la première chambre (811) du deuxième vérin (81).

13. Dispositif de travail du sol comprenant au moins un châssis (21) d'un véhicule tracteur ou d'une machine de travail du sol et au moins un ensemble (1) de travail du sol couplable audit châssis (21), **caractérisé en ce que** le ou au moins l'un des ensembles (1) de travail du sol est conforme à l'une des revendications 1 à 12.

14. Dispositif de travail du sol selon la revendication 13, **caractérisé en ce que** le nombre d'ensembles (1) de travail du sol étant au moins égal à 2, **en ce que** l'organe (7) d'immobilisation du premier bras (5) dans une position angulaire réglable autour du premier axe pivot (XX') de chaque ensemble (1) étant un vérin hydraulique dit premier vérin (71) , **en ce que** chaque ensemble (1) de travail du sol comprenant un actionneur (18) de commande en déplacement à pivotement du deuxième bras (6) de chaque ensemble (1) sous forme d'un vérin hydraulique dit deuxième vérin (81) et chaque ensemble (1) comprenant, pour le raccordement des premier et deuxième vérins (71, 81) de chaque ensemble (1) à au moins une source (22) de fluide sous pression, au moins un distributeur (11) et des conduites (121, 122, 123, 124) de circulation de fluide disposées au moins entre le distributeur (11) et les premier et deuxième vérins (71, 81), **en ce que** le distributeur (11) est commun auxdits ensembles (1) et **en ce que** le distributeur (11) est associé à une unité (13) de commande du distributeur (11) équipée d'au moins quatre organes (141, 142, 143, 144) de commande, **en ce que** l'un des organes de commande est configuré pour commander l'alimentation en fluide du premier vérin (71) de l'un des ensembles (1), **en ce que** l'un des organes de commande est configuré pour commander l'alimentation en fluide du premier vérin (71) de l'autre des ensembles (1), **en ce que** l'un des organes de commande est configuré pour commander l'alimentation en fluide de la deuxième chambre (812) du deuxième vérin (81) de chaque ensemble (1) et **en ce que** l'un des organes de commande est configuré pour commander l'alimentation en fluide de la première chambre (811) du deuxième vérin (81) de chaque ensemble (1).

## Patentansprüche

1. Anordnung (1) zur Bodenbearbeitung, umfassend mindestens eine Werkzeugträger-Halterung (2), die mit einem Rahmen (21) einer Bodenbearbeitungsmaschine oder eines Zugfahrzeugs koppelbar ist, ein nicht angetriebenes rotierendes Werkzeug (3) wie eine Scheibe und ein Verbindungssystem (4) zum Verbinden des Werkzeugs (3) mit der Halterung (2), wobei das Verbindungssystem (4) einen ersten Arm (5), der mit der Halterung (2) um eine Achse, erste Schwenkachse (XX') genannt, schwenkend gekoppelt ist, einen zweiten Werkzeugträgerarm (6), der mit dem ersten Arm (5) um eine Achse, zweite Schwenkachse (YY') genannt, die zu der ersten Schwenkachse (XX) parallel ist, schwenkend gekoppelt ist zwecks Bewegung des zweiten Arms (6) zwischen einer an den ersten Arm (5) angenäherten Position und einer von dem ersten Arm (5) beabstandeten Position, wobei das rotierende Werkzeug (3) eine Rotationsachse (ZZ') aufweist, die sich im Wesentlichen parallel, d. h. auf plus oder minus 15 Grad genau parallel, zu der zweiten Schwenkachse (YY') erstreckt, **dadurch gekennzeichnet, dass** die Anordnung (1) ein Organ (7) zum Feststellen des ersten Arms (5) in einer um die erste Schwenkachse (XX') einstellbaren Winkelposition umfasst und dass die Anordnung (1) mindestens ein Rückstellelement (9) zum Zurückstellen des zweiten Arms (6) in die von dem ersten Arm (5) beabstandete Position umfasst, wobei dieses Rückstellelement (9) dazu ausgebildet ist, in dem von der beabstandeten Position zu der dem ersten Arm (5) angenäherten Position angetriebenen Zustand des zweiten Arms (6) eine Rückstellkraft zum Zurückstellen des zweiten Arms (6) zu der von dem ersten Arm (5) beabstandeten Position hin auszuüben.

2. Anordnung (1) zur Bodenbearbeitung nach Anspruch 1, **dadurch gekennzeichnet, dass** die Rückstellkraft des Rückstellelements (9) eine einstellbare Kraft ist.

3. Anordnung (1) zur Bodenbearbeitung nach einem der Ansprüche 1 oder 2, **dadurch gekennzeichnet, dass** das Rückstellelement (9) ein Energiespeicher ist, der dazu ausgebildet ist, in dem zur Bewegung des zweiten Arms (6) aus der beabstandeten Position zu der dem ersten Arm (5) angenäherten Position hin angetriebenen Zustand eine Energie einzuspeichern und die Energie zwecks eines Antriebs zur Bewegung des zweiten Arms (6) von der dem ersten Arm angenäherten Position zu der von dem ersten Arm (5) beabstandeten Position hin wieder abzugeben, wobei dieser Energiespeicher aus der Gruppe der Energiespeicher ausgewählt ist, die aus Federn (91) und hydraulischen oder hydropneumatischen Speichern (92) gebildet wird.

4. Anordnung (1) zur Bodenbearbeitung nach einem der Ansprüche 1 bis 3, **dadurch gekennzeichnet, dass** das Rückstellelement (9) eine Feder (91) ist, die zwischen der Halterung (2) und dem zweiten Arm (6) angeordnet ist.

5. Anordnung (1) zur Bodenbearbeitung nach Anspruch 4, **dadurch gekennzeichnet, dass** die Feder (91) einem Element (911) zur Vorspannung der Feder (91) zugeordnet ist, das in der Lage ist, die Feder (91) einstellbar vorzuspannen, um die Rückstellkraft des durch die Feder (91) gebildeten Rückstellelements (9) zu variieren.

6. Anordnung (1) zur Bodenbearbeitung nach einem der Ansprüche 1 bis 5, **dadurch gekennzeichnet, dass** die Anordnung (1) einen Aktor (8) zur Steuerung der Schwenkbewegung des zweiten Arms (6) umfasst, der zwischen der Halterung (2) und dem zweiten Arm (6) angeordnet ist, wobei dieser Aktor (8) dazu ausgebildet ist, mindestens den Übergang des zweiten Arms (6) von einer von dem ersten Arm (5) beabstandeten Position zu einer dem ersten Arm (5) angenäherten Position zu steuern.

7. Anordnung (1) zur Bodenbearbeitung nach Anspruch 6, **dadurch gekennzeichnet, dass** der Aktor (8) zur Steuerung der Schwenkbewegung des zweiten Arms (6) ein Hydraulik- oder Pneumatikzylinder (81) ist, der an eine Druckfluidquelle (22) anschließbar ist, wobei dieser Aktor (81) eine erste Kammer (811), die dazu ausgebildet ist, in dem mit Druckfluid versorgten Zustand eine Bewegung des zweiten Arms (6) in Richtung einer Annäherung an den ersten Arm (5) zu steuern, und eine zweite Kammer (812) umfasst.

8. Anordnung (1) zur Bodenbearbeitung nach Anspruch 7, **dadurch gekennzeichnet, dass** das Rückstellelement (9) ein hydraulischer oder hydropneumatischer Speicher (92) ist, der in Fluidverbindung mit der zweiten Kammer (812) des Zylinders (81) steht, der den Aktor (8) zur Steuerung der Schwenkbewegung des zweiten Arms (6) darstellt.

9. Anordnung (1) zur Bodenbearbeitung nach Anspruch 8, **dadurch gekennzeichnet, dass** der Speicher, der ein hydropneumatischer Speicher (92) ist, aus zwei voneinander getrennten Teilen (921, 922) besteht, wobei einer der Teile mit einem Druckgas gefüllt ist, wobei der andere Teil in Fluidverbindung mit der zweiten Kammer des Zylinders (81), der ein Hydraulikzylinder ist, in der Lage ist, mit einem Hydraulikfluid gefüllt zu werden.

10. Anordnung (1) zur Bodenbearbeitung nach einem der Ansprüche 8 oder 9, **dadurch gekennzeichnet, dass** die Anordnung (1) zur Bodenbearbeitung eine Vorrichtung wie ein Manometer (10) zum Messen des Drucks in der zweiten Kammer (812) umfasst.

11. Anordnung (1) zur Bodenbearbeitung nach einem der Ansprüche 1 bis 10, **dadurch gekennzeichnet, dass** das Organ (7) zum Feststellen des ersten Arms (5) in einer um die erste Schwenkachse (XX') einstellbaren Winkelposition ein Zylinder (71) ist.

12. Anordnung (1) zur Bodenbearbeitung nach einem der Ansprüche 7 bis 10, **dadurch gekennzeichnet, dass** das Organ (7) zum Feststellen des ersten Arms (5) in einer um die erste Schwenkachse (XX') einstellbaren Winkelposition ein Hydraulikzylinder (71), erster Zylinder (71) genannt, ist, und der Aktor (8) zur Steuerung der Schwenkbewegung des zweiten Arms (6) ein Hydraulikzylinder (81), zweiter Zylinder (81) genannt, ist, die Anordnung (1) zum Anschließen der ersten und zweiten Zylinder (71, 81) an mindestens eine Druckfluidquelle (22) mindestens einen Verteiler (11) und Leitungen (121, 122, 123, 124) zur Zirkulation von Fluid, die mindestens zwischen dem Verteiler (11) und den ersten und zweiten Zylindern (71, 81) angeordnet sind, umfasst, und dass die Anordnung (1) eine Einheit (13) zur Steuerung des Verteilers (11) umfasst, die mit mindestens drei Steuerorganen (141, 142, 143, 144) ausgestattet ist, dass eines der Steuerorgane dazu ausgebildet ist, die Fluidversorgung des ersten Zylinders (71) zu steuern, dass eines der Steuerorgane dazu ausgebildet ist, die Fluidversorgung der zweiten Kammer (812) des zweiten Zylinders (81) zu steuern, und dass eines der Steuerorgane dazu ausgebildet ist, die Fluidversorgung der ersten Kammer (811) des zweiten Zylinders (81) zu steuern.

13. Bodenbearbeitungsvorrichtung, die mindestens einen Rahmen (21) eines Zugfahrzeugs oder einer Bodenbearbeitungsmaschine und mindestens eine Anordnung (1) zur Bodenbearbeitung, die an den Rahmen (21) koppelbar ist, umfasst, **dadurch gekennzeichnet, dass** die oder mindestens eine der Anordnungen (1) zur Bodenbearbeitung einem der Ansprüche 1 bis 12 entspricht.

14. Bodenbearbeitungsvorrichtung nach Anspruch 13, **dadurch gekennzeichnet, dass** die Anzahl von Anordnungen (1) zur Bodenbearbeitung mindestens 2 beträgt, dass das Organ (7) zum Feststellen des ersten Arms (5) in einer um die erste Schwenkachse (XX') jeder Anordnung (1) einstellbaren Winkelposition ein Hydraulikzylinder, erster Zylinder (71) genannt, ist, dass jede Anordnung (1) zur Bodenbearbeitung einen Aktor (18) zur Steuerung der Schwenkbewegung des zweiten Arms (6) jeder Anordnung (1) in Form eines Hydraulikzylinders, zweiter Zylinder (81) genannt, umfasst, und jede Anordnung (1) zum Anschließen der ersten und zweiten Zylinder (71, 81) jeder Anordnung (1) an mindestens eine Druckfluidquelle (22) mindestens einen Verteiler (11) und Leitungen (121, 122, 123, 124) zur Zirkulation von Fluid, die mindestens zwischen dem Verteiler (11) und den ersten und zweiten Zylindern (71, 81) angeordnet sind, umfasst, dass der Verteiler (11) den Anordnungen (1) gemeinsam ist und dass der Verteiler (11) einer Einheit (13) zur Steuerung des Verteilers (11) zugeordnet ist, die mit mindestens vier Steuerorganen (141, 142, 143, 144) ausgestattet ist, dass eines der Steuerorgane dazu ausgebildet ist, die Fluidversorgung des ersten Zylinders (71) der einen der Anordnungen (1) zu steuern, dass eines der Steuerorgane dazu ausgebildet ist, die Fluidversorgung des ersten Zylinders (71) der anderen der Anordnungen (1) zu steuern, dass eines der Steuerorgane dazu ausgebildet ist, die Fluidversorgung der zweiten Kammer (812) des zweiten Zylinders (81) jeder Anordnung (1) zu steuern, und dass eines der Steuerorgane dazu ausgebildet ist, die Fluidversorgung der ersten Kammer (811) des zweiten Zylinders (81) jeder Anordnung (1) zu steuern.

## Claims

1. Soil working assembly (1) comprising at least one tool-carrying support (2) couplable to a chassis (21) of a soil working machine or a towing vehicle, a non-motorized rotary tool (3), such as a disc, and a system (4) for connecting the tool (3) to the support (2), the connection system (4) comprises a first arm (5) coupled pivotingly to the support (2) about an axis referred to as the first pivot axis (XX'), a second tool-carrying arm (6) coupled pivotingly to the first arm (5) about an axis referred to as the second pivot axis (YY') parallel to the first pivot axis (XX) for moving the second arm (6) between a position close to the first arm (5) and a position separated from the first arm (5), the rotary tool (3) having a rotation axis (ZZ') extending substantially parallel, i.e. parallel to within plus or minus 15 degrees, to the second pivot axis (YY'), **characterized in that** said assembly (1) comprises a member (7) for immobilizing the first arm (5) in an adjustable angular position about the first pivot axis (XX'), and **in that** said assembly (1) comprises at least one biasing element (9) for returning the second arm (6) to a position separated from the first arm (5), this biasing element (9) being configured to exert a biasing force on the second arm (6) towards the position separated from the first arm (5) when the second arm (6) is being moved from the separated position towards the position close to the first arm (5).

2. Soil working assembly (1) according to Claim 1, **characterized in that** the biasing force of the biasing element (9) is an adjustable force.

3. Soil working assembly (1) according to one of Claims 1 or 2, **characterized in that** the biasing element (9) is an energy accumulator configured to store energy when the second arm (6) is being moved from the separated position towards the position close to the first arm (5) and to restore said energy to move the second arm (6) from the position close to the first arm towards the position separated from the first arm (5), this energy accumulator being chosen from the group of energy accumulators formed by springs (91) and hydraulic or hydropneumatic accumulators (92).

4. Soil working assembly (1) according to one of Claims 1 to 3, **characterized in that** the biasing element (9) is a spring (91) arranged between the support (2) and the second arm (6).

5. Soil working assembly (1) according to Claim 4, **characterized in that** the spring (91) is associated with a prestressing element (911) of the spring (91) for adjustably prestressing the spring (91) to vary the biasing force of the biasing element (9) formed by said spring (91).

6. Soil working assembly (1) according to one of Claims 1 to 5, **characterized in that** said assembly (1) comprises an actuator (8) for controlling the pivoting movement of the second arm (6) arranged between the support (2) and the second arm (6), this actuator (8) being configured to control at least the movement of the second arm (6) from a position separated from the first arm (5) to a position close to the first arm (5).

7. Soil working assembly (1) according to Claim 6, **characterized in that** the actuator (8) for controlling the pivoting movement of the second arm (6) is a hydraulic or pneumatic cylinder (81) connectable to a source (22) of pressurized fluid, this cylinder (81) comprising a first chamber (811) configured to control a movement of the second arm (6) towards the first arm (5), when supplied with pressurized fluid, and a second chamber (812).

8. Soil working assembly (1) according to Claim 7, **characterized in that** the biasing element (9) is a hydraulic or hydropneumatic accumulator (92) in fluidic communication with the second chamber (812) of the cylinder (81) constituting the actuator (8) for controlling the pivoting movement of the second arm (6).

9. Soil working assembly (1) according to Claim 8, **characterized in that** the accumulator, which is a hydropneumatic accumulator (92), consists of two parts (921, 922) separated from each other, one of the parts being filled with a pressurized gas, the other part being in fluidic communication with the second chamber of the cylinder (81), which is a hydraulic cylinder, and being fillable with a hydraulic fluid.

10. Soil working assembly (1) according to one of Claims 8 or 9, **characterized in that** the soil working assembly (1) comprises a device, such as a pressure gauge (10), for measuring the pressure in the second chamber (812).

11. Soil working assembly (1) according to one of Claims 1 to 10, **characterized in that** the member (7) for immobilizing the first arm (5) in an adjustable angular position about the first pivot axis (XX') is a cylinder (71).

12. Soil working assembly (1) according to one of Claims 7 to 10, **characterized in that**, where the member (7) for immobilizing the first arm (5) in an adjustable angular position about the first pivot axis (XX') is a hydraulic cylinder (71) referred to as the first cylinder (71) and the actuator (8) for controlling the pivoting movement of the second arm (6) is a hydraulic cylinder (81) referred to as the second cylinder (81), the assembly (1) comprises, for connecting the first and second cylinders (71, 81) to at least one source (22) of pressurized fluid, at least one distributor (11) and fluid circulation pipes (121, 122, 123, 124) arranged at least between the distributor (11) and the first and second cylinders (71, 81), and **in that** said assembly (1) comprises a control unit (13) for the distributor (11) equipped with at least three control members (141, 142, 143, 144), **in that** one of the control members is configured to control the supply of fluid to the first cylinder (71), **in that** one of the control members is configured to control the supply of fluid to the second chamber (812) of the second cylinder (81), and **in that** one of the control members is configured to control the supply of fluid to the first chamber (811) of the second cylinder (81).

13. Soil working device comprising at least one chassis (21) of a towing vehicle or of a soil working machine and at least one soil working assembly (1) connectable to said chassis (21), **characterized in that** the or at least one of the soil working assemblies (1) is a soil working assembly according to one of Claims 1 to 12.

14. Soil working device according to Claim 13, **characterized in that** the number of soil working assemblies (1) is at least equal to 2, **in that** the member (7) for immobilizing the first arm (5) in an adjustable angular position about the first pivot axis (XX') of each assembly (1) is a hydraulic cylinder referred to as the first cylinder (71), **in that** each soil working assembly (1) comprises an actuator (18) for controlling the pivoting movement of the second arm (6) of each assembly (1) in the form of a hydraulic cylinder referred to as the second cylinder (81) and each assembly (1) comprises, for connecting the first and second cylinders (71, 81) of each assembly (1) to at least one source (22) of pressurized fluid, at least one distributor (11) and fluid circulation pipes (121, 122, 123, 124) arranged at least between the distributor (11) and the first and second cylinders (71, 81), **in that** the distributor (11) is common to said assemblies (1) and **in that** the distributor (11) is associated with a control unit (13) for the distributor (11) equipped with at least four control members (141, 142, 143, 144), **in that** one of the control members is configured to control the supply of fluid to the first cylinder (71) of one of the assemblies (1), **in that** one of the control members is configured to control the supply of fluid to the first cylinder (71) of the other of the assemblies (1), **in that** one of the control members is configured to control the supply of fluid to the second chamber (812) of the second cylinder (81) of each assembly (1), and **in that** one of the control members is configured to control the supply of fluid to the first chamber (811) of the second cylinder (81) of each assembly (1).
